# DEMANDE DE BREVET EUROPEEN

(11) **EP 1 070 907 A1**
(43) Date de publication de la demande: **24.01.2001**
(21) Numéro de dépôt: 99401824.0
(22) Date de dépôt: 20.07.1999
(51) Int. Cl.: F16L 59/02, F16L 11/08

(54) **Procédé de réalisation d'une conduite calorifugée à enveloppe externe de protection et conduite ainsi réalisée**

(71) Demandeur: ITP, 78430 Louveciennes (FR)
(72) Inventeur: Marchal, Philippe, 92420 Vaucresson (FR); Rivier, Mathieu, 78500 Le Port Marly (FR)
(74) Mandataire: Célanie, Christian

(57) **Abrégé**

L'invention concerne un procédé de réalisation d'une enveloppe externe de protection autour d'une conduite calorifugée, notamment pour la construction de canalisations sous-marines véhiculant des produits pétroliers dans un tube interne (2) entouré d'une couche calorifuge (3) en matériau microporeux. Pour constituer l'enveloppe de protection, on enroule autour de la couche calorifuge (3), un fil d'acier (40) selon une configuration à spires jointives, de manière à créer une armature (4), qui peut être doublée d'une couche d'étanchéité (5). Le matériau calorifuge est un matériau microporeux en plaques autoporteuses dont la souplesse permet de les enrouler autour du tube interne en appui sur ce dernier.

## Description

La présente invention concerne la conception et la réalisation de conduites calorifugées telles que celles qui servent à véhiculer des produits liquides ou gazeux dans un milieu environnant dont la température peut être très différente, d'où le besoin d'une isolation thermique qui préserve leur état physique et/ou chimique. Ce genre de problème se pose en particulier lorsque la conduite en question est destinée à constituer en tout ou partie une canalisation pour le transport des produits pétroliers sur de longues distances.

Dans un tel contexte, l'invention a principalement pour objet un procédé dont la caractéristique essentielle se situe dans le mode de réalisation d'une enveloppe externe constituant armature de protection autour d'un tube interne recouvert par une couche annulaire intermédiaire de matériau calorifuge. Elle s'étend bien entendu aux conduites calorifugées telles que celles qui peuvent être réalisées conformément audit procédé. Elle trouve application, préférentiellement bien que non exclusivement, dans la construction des canalisations sous-marines couramment désignées sous la notion anglo-saxonne de pipeline, qui sont destinées à véhiculer des produits pétroliers qui doivent rester à l'état liquide et/ou gazeux fluide, donc chauds par rapport aux mers froides, depuis un site d'extraction en pleine mer jusqu'à la terre ferme pour utilisation ou transformation.

Dans le cadre de l'invention, le terme de conduite doit être entendu dans son acceptation générale d'un conduit tubulaire, couvrant diverses dénominations (tube, tuyau, conduit, canalisation, etc.). Dans un but de clarté, on réservera cependant l'appellation « tube » à l'un des composants tubulaires coaxial formant une telle conduite et celle de « canalisation » à un ensemble de tronçons de conduite, ou tuyaux, qui sont assemblés par aboutement en série l'un avec l'autre pour former les éléments successifs d'un conduit tubulaire continu de grande longueur.

Pour fixer les idées, on se placera ci-après dans le cadre de l'application préférée citée ci-dessus, application pour laquelle les contraintes et exigences techniques sont particulièrement élevées. On va rappeler ci-dessous leurs principales spécificités, ainsi que les solutions qui sont généralement retenues.

Les canalisations sous-marines de ce type sont traditionnellement montées à partir d'une série de conduites élémentaires identiques, fabriquées en usine. Il s'agit de tuyaux que l'on transporte sur le site de pose de la canalisation, et que là, on assemble bout à bout, en raccordant de proche en proche un tuyau aval déjà intégré dans la canalisation à un tuyau amont à raccorder, au fur et à mesure qu'on les fait progresser, pour les laisser plonger dans la mer à la suite des tuyaux déjà assemblés.

Dans l'art connu, chaque tuyau est couramment constitué de deux tubes en acier coaxiaux qui ménagent entre eux, en partie courante de la conduite, un espace annulaire d'isolement thermique autour du tube interne délimitant le conduit de circulation des fluides à véhiculer. Le rôle principal du tube externe est alors d'assurer l'étanchéité, la tenue à la pression hydrostatique régnant au fond de la mer et la résistance aux chocs. Il forme ainsi, en particulier, une enveloppe externe de protection pour un matériau calorifuge contenu dans l'espace annulaire.

Les canalisations ainsi réalisées ne sont pas exemptes d'inconvénients. Tout d'abord, les tuyaux constituant les tronçons élémentaires sont lourds et chers à mettre en oeuvre. En outre, les jonctions entre tuyaux impliquent des soudures et l'utilisation de diverses pièces auxiliaires. Il en résulte une augmentation non négligeable du prix de revient et des contraintes mécaniques élevées que les tubes doivent encaisser. Il est donc apparu souhaitable de disposer d'une technologie de réalisation d'enveloppes d'isolation thermique et de protection mécanique permettant de réduire substantiellement le prix de revient, tout en conservant des caractéristiques techniques avantageuses, en tenue mécanique notamment, telles qu'elles sont requises pour ce type d'application.

En particulier, il est impératif de conserver une bonne isolation thermique du tube interne guidant le fluide, ce, quelque soit la structure globale de la canalisation. En effet, et à titre d'exemple, les canalisations sous-marines véhiculant des produits pétroliers se trouvent à température froide dans les fonds marins (habituellement entre 0 et 20 °C), alors que les fluides véhiculés se présentent typiquement entre 100 et 200 °C, suivant les prescriptions usuelles. Même lorsque cette température diminue au cours de la vie d'un champ producteur, le fluide doit conserver une température minimale (par exemple 40 °C) jusqu'au lieu de destination, en bout de la canalisation, afin d'éviter la formation de condensats et de dépôts.

D'autre part, les distances à parcourir sont considérables. Elles se chiffrent en dizaines de kilomètres. La qualité d'isolation thermique doit en plus perdurer pendant de longues années d'utilisation des canalisations. Parmi d'autres impératifs de la pratique, on peut souligner que cette capacité d'isolation thermique ne doit pas souffrir des opérations d'assemblage des canalisations au cours desquelles des tubes successifs sont raccordés bout à bout, ni des opérations de mise en place d'une canalisation ainsi formée, progressivement plongée dans la mer, ni encore des conditions de transport entre une usine de fabrication des tubes et le site de pose de la canalisation.

D'autres difficultés sont liées aux conditions de fabrication des tuyaux, aux tolérances dimensionnelles inévitables pour les tubes, compte tenu de leur nature (généralement de l'acier) et de leur diamètre (généralement compris entre 100 et 700 millimètres), à la réalisation des étanchéités, plus celle à laquelle l'invention s'intéresse particulièrement, à savoir la préservation d'une isolation thermique efficace et durable.

Une des solutions connues à ce jour pour assurer l'isolation thermique consiste à envelopper le tube interne véhiculant les fluides de plaques ou bandes de matériau calorifuge autoporteuses que l'on enroule en appui sur lui, puis à enfiler l'ensemble dans le tube externe protecteur. C'est ainsi qu'il a été proposé de constituer la couche intermédiaire isolante en un matériau calorifuge microporeux à haute porosité en pores ouverts, plaqué contre le tube interne. Pour les diamètres de tubes utilisés, il existe sur le marché des produits de nature principalement minérale qui présentent une flexibilité suffisante à cette fin, notamment des matériaux à base de silice pyrogénée, mais ils ont l'inconvénient d'être très faibles en propriétés mécaniques. Ils résistent mal à la pression et aux efforts de traction ou de flexion, et leur fragilité rend les opérations délicates lors de la fabrication et lors de la pose des canalisations. De plus, la technologie appliquée ne permet pas d'en remplir tout l'espace annulaire entre les deux tubes.

Pour résoudre le problème ainsi posé, l'invention consiste essentiellement à remplacer le tube externe par une enveloppe réalisée de manière à constituer une armature mécanique pour le matériau calorifuge, et de préférence par une enveloppe composite qui, en même temps, l'enferme de manière étanche contre le tube interne. On parvient ainsi, en particulier, à assurer un très bon pouvoir d'isolation thermique qui résiste bien dans le temps malgré les fortes pressions régnant au fond de la mer, les risques de chocs accidentels contre la paroi externe de la canalisation, et l'ensemble des contraintes mécaniques et thermiques que les conduites ont à supporter.

Par ses différentes caractéristiques et leurs diverses combinaisons techniquement opérantes, telles qu'elles seront plus complètement définies et décrites ci-après, l'invention permet aussi de réduire la masse et l'encombrement global de la conduite, ce qui est un avantage notamment en ce qui concerne les opérations de transport et de pose, tout en lui conservant une masse fondrière suffisante pour assurer la stabilité de la canalisation quand elle repose finalement sur le fond de la mer, sans qu'il soit besoin de lui adjoindre des blocs de béton ou autres dispositifs de lestage.

D'une manière plus précise, l'invention a pour objet un procédé de réalisation d'une conduite calorifugée, notamment pour la construction de canalisations sous-marines véhiculant des produits pétroliers, ladite conduite comprenant un tube interne entouré d'une couche intermédiaire de matériau calorifuge, qui consiste essentiellement à enrouler un fil à comportement non élastique autour de la couche de matériau calorifuge, et contre celle-ci, selon une configuration à spires suffisamment jointives pour constituer pour elle une armature de consolidation mécanique.

Le fil est de préférence en un alliage métallique, tel que l'acier, sous une qualité possédant une densité élevée et une bonne résistance mécanique. Une fois ainsi enroulé, ce fil constitue également pour la conduite une enveloppe de protection remplaçant avantageusement le tube externe de l'art connu. Il est toutefois préférable, conformément à une caractéristique de l'invention, de prévoir une protection complémentaire en étanchéité par une gaine extérieure en matière plastique, préférentiellement en polymère à propriétés élastoplastiques.

Bien entendu, l'invention a également pour objet une conduite calorifugée telle qu'elle peut être réalisée conformément à ce procédé, donc essentiellement caractérisée par la présence dudit fil, éventuellement enrobé extérieurement de ladite gaine, mais aussi par la nature des matériaux de ses différents éléments, par leurs particularités dimensionnelles et par la construction des extrémités de raccordement entre conduites successives d'une même canalisation.

L'invention sera mieux comprise et d'autres caractéristiques et avantages apparaîtront à la lecture de la description qui suit, laquelle fait référence aux figures annexées, parmi lesquelles :
- la figure 1 représente schématiquement, en coupe longitudinale, un exemple de tronçon de conduite calorifugée réalisée suivant l'invention, comprenant, autour d'une couche intermédiaire de matériau calorifuge, une armature de protection constituée à partir d'un fil en acier enroulé en spirales jointives,
- et la figure 2 illustre le procédé de réalisation d'une telle conduite en son étape d'enroulement du fil.

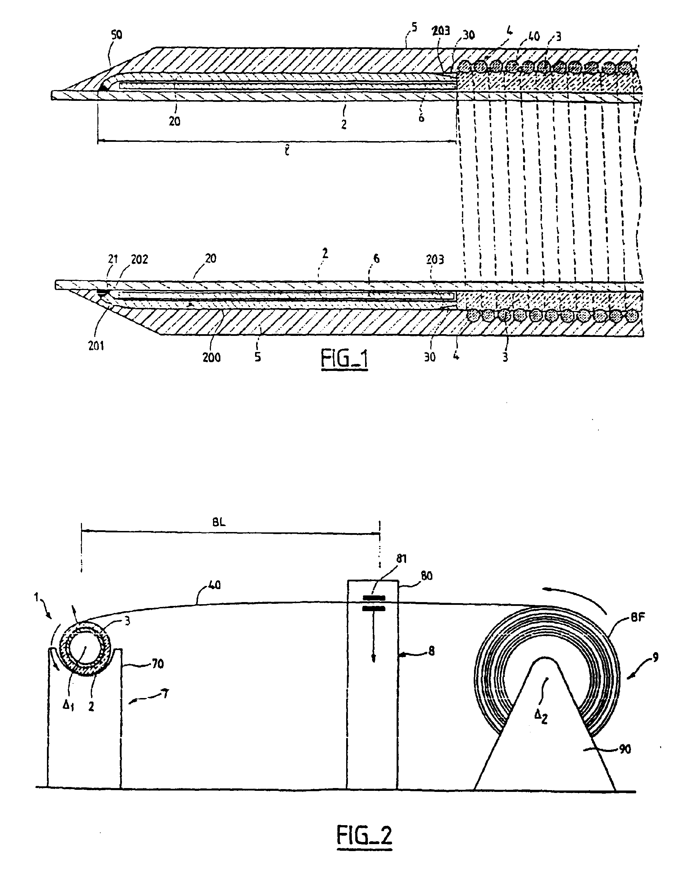

La représentation de la figure 1 est limitée à une partie d'une conduite calorifugée, considérée au voisinage de son extrémité de raccordement 1, étant entendu qu'une canalisation complète réalisée selon l'invention comporte une série de telles conduites, en tronçons qui sont raccordés par aboutement comme il a été rappelé plus haut.

Sur la partie droite de la figure, on voit que la partie courante de la conduite, celle qui présente en pratique la plus grande longueur, comporte plusieurs couches annulaires en contact les unes avec les autres, à savoir un tube interne 2, constituant le conduit proprement dit dans lequel le fluide est véhiculé, une couche intermédiaire d'isolation thermique 3, et une enveloppe externe de protection, intégrant un fil en spirale 40 apte à remplir une fonction de renforcement mécanique de la couche intermédiaire 3 conformément à l'invention.

Le tube interne 2 est généralement en acier. C'est notamment le cas pour les applications sous-marines dans lesquelles on s'est placé. Quant à la couche intermédiaire 3 qui entoure ce tube 2, elle est constituée en un matériau calorifuge microporeux, à structure à haute porosité en pores ouverts, qui est de nature essentiellement céramique, plus particulièrement à base de silice pyrogénée.

D'une manière plus précise, on utilise ici des plaques d'isolant microporeux telles qu'elles existent dans le commerce sous la marque commerciale « Microtherm ». Le matériau calorifuge de ces plaques, qui se présentent en bandes enroulables autour du tube interne, est, fait d'un mélange de poudre silicique et de fibres de renforcement céramiques, le tout compacté en une structure tridimensionnelle cohérente de fines particules qui sont retenues dans une enveloppe en fibres non tissée de coton, laquelle n'est pas étanche.

Du point de vue chimique, la matière de base est de la silice renfermant une partie mineure de dioxyde de titane. Le diamètre de pores y est inférieur ou, au plus, égal à 0,1 micromètre. Et par la notion de porosité dite ouverte, on entend ici, comme il est d'ailleurs usuel, que les pores ouverts en communication les uns avec les autres représentent la quasi-totalité des pores que la structure microporeuse comporte, soit en pratique de l'ordre de 85 à 95 % en volume du volume global des pores. Ce dernier est lui-même de l'ordre de 80 % du volume apparent, s'agissant d'une haute porosité.

Conformément à une caractéristique importante du procédé selon l'invention, la couche de matériau calorifuge 3 est recouverte par un fil 40, qui est enroulé en appui sur elle selon une configuration spiralée, et qui est lui-même recouvert par une couche extérieure 5. Cette dernière est continue et elle enrobe le contour extérieur des spires du fil.

Dans le cas préféré illustré, le fil 40 est de section uniforme, ronde et lisse, et il est enroulé à spires jointives. On remarque en outre qu'il est en tous points partiellement incrusté dans le matériau calorifuge de la couche 3, du moins dans toute la partie courante de la conduite.

Le matériau constituant ce fil est en alliage métallique, plus particulièrement de l'acier, qui possède une densité d élevée, typiquement supérieure à 6, et de bonnes caractéristiques mécaniques, se traduisant notamment par des valeurs élevées en limite d'élasticité et en module d'élasticité longitudinale (module de Young). Ses propriétés permettent d'obtenir une bonne résistance au flambage et à l'écrasement des spires de fil. Il est à noter que pour certaines applications, on peut avoir intérêt à utiliser un fil cranté de place en place pour faciliter sa mise en oeuvre par enroulement.

Une fois mis en place par le procédé décrit plus loin, le fil 40 constitue la couche 4 formant armature de protection, qui s'étend sur toute la surface de la couche calorifuge 3, tant en section qu'en longueur. Il ressort par contre de la figure 1 que la couche de calorifuge 3 ne recouvre pas la zone d'extrémité du tube interne 2 (à gauche de la figure).

En effet, on ménage à chaque extrémité de la conduire une zone terminale appropriée pour pouvoir effectuer des assemblages entre conduites contiguës d'une canalisation sous-marine tout en préservant la continuité des propriétés mécaniques et thermiques. Or, il est connu que l'assemblage demande que les appareils de soudage aient aisément accès aux faces terminales des tubes internes.

L'assemblage des conduites élémentaires bout à bout fait intervenir des pièces de raccordement 20, prévues aux deux extrémités de chacune. Il s'agit de pièces métalliques, notamment en acier, globalement de forme cylindro-conique à faible ouverture.

Chaque pièce 20 comporte en fait une partie principale cylindrique 200, de même diamètre extérieur que la couche d'isolation thermique 3, qui se prolonge par une extrémité antérieure conique 201, dont l'ouverture circulaire 202 a un diamètre égal au jeu près au diamètre externe du tube 2. Par cette extrémité antérieure 201, la pièce est soudée en 21, sur tout le pourtour de son ouverture 202, à la paroi externe du tube 2. A son extrémité postérieure opposée, elle rejoint la couche 3 de manière progressive, ce qui illustré sur la figure 1 par la présence d'un coin annulaire 30, qui prolonge la couche de calorifuge 3 et présente intérieurement une face en biais complémentaire d'un biseau 203 formé extérieurement sur la pièce de raccordement 20.

A titre d'exemple, la pièce 20 couvre au total une distance (1) d'environ 25 cm à partir de l'extrémité correspondante de la couche de matériau calorifuge 3 et de la couche d'armature 4, le tube interne 2 ayant un diamètre, de 20 cm et la couche de matériau microporeux 3 ayant une épaisseur d'environ 15 mm.

Dans une variante de mise en oeuvre préférée de l'invention, les extrémités du fil 40, enroulé en spires jointives, peuvent être soudées localement à la pièce de raccordement 20. Il est évident que dans le cas où le coin 30 est prévu annulaire, il est interrompu pour laisser passer le fil 40 à l'endroit de la soudure.

Pour compléter chaque zone terminale de la conduite calorifugée, telle que représentée sur la figure 1, l'espace annulaire restant entre la paroi externe du tube 2 et la paroi interne de la pièce 20 est rempli d'un matériau calorifuge 6, qui peut être différent de celui de la couche intermédiaire 3 et qui est constitué, par exemple, par de la laine de verre.

La couche d'armature formée par le fil 40, ainsi que les pièces 20, du moins dans la forme de réalisation décrite, sont recouvertes d'une couche épaisse 5 de matériau élasto-plastique, qui assure l'étanchéité de la protection aux chocs en combinaison avec la couche d'armature 4, venant ainsi compléter l'enveloppe externe de protection. Par la nature de cette couche élasto-plastique 5 et par la manière dont elle est mise en oeuvre, on sait obtenir que le fil 40 s'y trouve partiellement noyé par sa surface extérieurement accessible, celle qui n'est pas incrustée dans la couche de matériau calorifuge 3.

On peut notamment utiliser ici une matière plastique à base de résines de polyoléfines, telles que les polymères du type polyéthylène. L'épaisseur de la couche 5 est typiquement de 15 mm. En extrémité de la conduite 1, elle présente un biseau 50 par dessus la soudure annulaire 21 réalisée entre la pièce de raccordement 20 et le tube interne 2.

D'autre part, au cas où l'on aurait à craindre les conséquences de la perméabilité résiduelle de ce genre de matériau, ou même des ruptures accidentelles de l'étanchéité qu'ils assurent, on peut prévoir d'insérer un produit dissicant sous la couche 5, notamment lors de la mise en place du fil 40.

La couche 4 de fil 40 à spires jointives présente de nombreux avantages.

Elle offre une grande résistance à l'écrasement, ce qui protège le matériau microporeux 3, par nature très fragile, des efforts liés à la pose et à la pression hydrostatique régnant au fond de la mer, même si, pour sa part, la couche superficielle 5, en matériau à propriétés élasto-plastiques, contribue à amortir aussi ces contraintes. L'efficacité du matériau microporeux 3, et dans le cas général du matériau calorifuge, reste donc entièrement préservée, ce qui ne serait pas le cas pour un écrasement plus ou moins prononcé de cette couche 3.

Pour fixer les idées, en reprenant les valeurs numériques déjà énoncées (diamètre du tube interne égal à 25 cm et épaisseur de la couche 3 égale à 15 mm) et si le diamètre du fil d'acier enroulé 40 est de 7 mm, on peut envisager des conditions de pression du milieu externe de 3 Mpa, telles qu'elles existent par exemple sous une profondeur d'immersion de 300 m en mer.

En outre, la spirale d'acier (couche 4) permet, grâce à la densité du matériau utilisé (typiquement d > 6, c'est-à-dire trois fois plus importante que celle du béton), de lester efficacement la conduite en mer en augmentant sa masse fondrière, bien qu'il n'y ait pas de tube extérieur en acier. Il n'est pas non plus besoin de faire appel à des dispositifs externes de lestage.

En pratique, c'est la spirale de fil 40, avantageusement combinée à la couche superficielle 5, qui joue globalement le rôle du tube externe en acier de l'art connu. Bien que restant suffisant pour assurer le lestage précité, la masse totale est cependant inférieure à celle qui serait obtenue dans des conditions géométriques identiques, ou pour le moins similaire, dans une configuration comportant un tube externe en acier.

Il est à relever que la disparition du tube externe est particulièrement avantageuse dans le cas de tubes de grands diamètres. En effet, le jeu nécessaire à un enfilage est d'autant plus important que ce diamètre augmente. Il s'ensuit corrélativement une augmentation du volume mort, ce que permet précisément d'éviter le procédé selon l'invention.

Enfin, la configuration en spirale fait preuve d'un meilleur comportement vis-à-vis de la propagation du flambage qu'un tube homogène, en acier par exemple.

Conformément à différentes variantes de mise en oeuvre de l'invention, qui cependant ne font pas l'objet d'une illustration par une figure particulière, on peut prévoir des couches supplémentaires à celles qui ont été décrites ci-dessus. Il peut s'agir, par exemple, d'une couche intercalaire entre l'armature spiralée formée par le fil 40 et la couche de matériau isolant 3 et/ou d'une couche barrière d'étanchéité entre le tube interne 2 et la couche d'isolant.

Bien que ce genre de disposition ait pour propos d'assurer une meilleure étanchéité globale, il se révélera souvent plus avantageux de réserver la fonction d'étanchéité à la dernière couche 5 de l'enveloppe de protection quitte à incorporer dans l'ensemble un produit dessicant pour compenser les défauts d'étanchéité qu'elle pourrait présenter, en absorbant les infiltrations d'eau. On comprend que de cette manière, le produit dessicant agit en compensation de la perméabilité éventuelle de la couche 5 la plus externe, ce qui peut répondre à un besoin non négligeable, dans le cas notamment où elle est réalisée en base de polyéthylène.

Se dispenser d'une couche barrière interne en revêtement de la paroi du tube interne 2 entraîne un autre avantage, par un traitement différent des infiltrations d'eau pouvant se produire à travers la couche d'armature 4 et la couche de matériau calorifuge 3. En effet, si l'eau introduite reste stationnaire, la corrosion du tube qu'elle provoque se concentre en un seul point, et l'on risque un percement de la paroi du tube. Dans le cas contraire, la corrosion est répartie naturellement sur une plus grande surface, mais donc corrélativement de façon superficielle, puisque l'oxygène introduit avec l'eau n'est pas renouvelé.

Pour mieux illustrer l'invention, on citera maintenant un exemple de réalisation concrète, qui diffère du précédent dans les données numériques, lesquelles correspondent à une section de passage plus faible pour le fluide véhiculé. Le diamètre du tube interne 2 y est de 10 cm environ, le diamètre du fil 40 de 8 mm, l'épaisseur de la couche 3 de matériau calorifuge microporeux de 12 mm, et celle de la couche externe 5 en polyéthylène de 15 mm. Dans ces conditions, la pression du milieu extérieur admissible est de 35 Mpa, ce qui correspond à une profondeur d'immersion de 3500 mètres.

Selon un autre aspect préférentiel de l'invention, lors de l'enroulement du fil 40 autour du tube interne 2 muni de sa couche 3 de matériau calorifuge, le moment exercé pour dépasser la limite élastique du fil 40 doit se faire avec un bras de levier important. Cette disposition a pour effet de limiter la pression locale exercée, et donc de ménager le matériau calorifuge, en évitant de détériorer ce dernier, compte tenu du fait que s'agissant d'un matériau microporeux en plaques enroulables tel que sélectionné dans l'exemple décrit, il est fragile par nature.

La figure 2 illustre schématiquement un dispositif utilisé à cette fin, dans le cadre du procédé de l'invention pendant l'étape d'enroulement du fil 40.

Le dispositif comprend en réalité trois parties principales : un appareil 7 de mise en rotation de la conduite 1 autour d'un premier axe horizontal Δ1, un support 9 de bobine de fil BF, permettant à celle-ci de tourner autour d'un second axe horizontal Δ2, et un dispositif de guidage vertical 8 du fil 40.

Bien que le fil 40 puisse être théoriquement enroulé autour du tube 2 muni de la couche de matériau calorifuge 3 alors que ce dernier reste fixe, il sera en général préférable dans la pratique industrielle d'appliquer un autre mode opératoire, tel que celui décrit ci-après.

Conformément à ce mode opératoire, on dispose le tube 2, préalablement muni de sa couche de matériau calorifuge 3 enroulée en appui sur lui, sur le bâti 70 de l'appareil 7, qui va l'entraîner en rotation autour de l'axe horizontal Δ1. Pour ce faire, on utilise tout moyens classiques

La rotation de la conduite 1 exerce une traction sur le fil 40 et celui-ci s'enroule régulièrement, en spires jointives, autour de la couche intermédiaire 3 qui lui est sous-jacente, ce à partir d'une des extrémités du tube 2 en progressant de proche en proche jusqu'à l'autre extrémité en fonction du sens de rotation imprimé au tube 2. L'ajout de moyens de guidage horizontal du fil 40 (qui ne sont pas représentés sur la figure) permet d'assurer un contrôle de son déplacement longitudinal au cours de son enroulement le long de la conduite, et donc de maîtriser que les spires soient bien jointives si nécessaire.

La bobine débitrice de fil BF est montée de même sur le bâti 90 du support 9. Celle-ci est en rotation libre autour de l'axe Δ2. Elle est donc entraînée à la demande par la rotation de la conduite 1 autour de l'axe Δ1.

Selon un aspect du procédé de l'invention, on prévoit un dispositif de guidage vertical 8 du fil 40, comprenant un bâti 80 et un organes de guidage vertical proprement dit 81, dans lequel passe le fil 40 à enrouler.

Ce guidage vertical exerce une force qui crée un moment au niveau de la conduite 2. Ce moment permet de dépasser la limite élastique du fil 40 et crée une réaction d'appui suffisamment faible pour être reprise par la couche de matériau isolant 4, de telle sorte que celle-ci ne se trouve pas écrasée de façon significative, du moins pas suffisamment, ni en profondeur radiale ni en étendue longitudinale, pour que les qualités d'isolation thermique du matériau calorifuge soient dégradées.

Pour obtenir ce moment, on éloigne le dispositif de guidage vertical 8 de la machine 7 d'une distance suffisante pour obtenir un bras de levier important BL. Pour les ordres de grandeur de dimensions précédemment indiquées, le bras de levier souhaitable est typiquement de 2 mètres.

A la lecture de ce qui précède, on constate aisément que l'invention atteint bien les buts qu'elle s'est fixés. Il doit être clair cependant que l'invention n'est pas limitée aux seuls exemples de réalisation explicitement décrits, notamment en relation avec les figures 1 et 2.

En particulier, les exemples numériques n'ont été donnés que pour mieux préciser l'invention et ne peuvent en aucune manière limiter la portée de l'invention. De même, les matériaux utilisables sont essentiellement liés à l'application spécifique envisagée et participent d'un simple choix technologique à la portée de l'homme du métier.

Par ailleurs, on s'est plus spécialement intéressé au cas d'un fil de section ronde, mais un fil de section ovale pourrait également convenir. On pourrait même utiliser un fil de section carrée, ou plus généralement rectangulaire, encore qu'il serait alors moins facile d'obtenir qu'il s'incruste partiellement dans le matériau calorifuge, par sa surface interne aux spires successives.

Or si l'on respecte correctement les dispositions qui ont été décrites à titre préférentiel, il en résulte une meilleure transmission des efforts longitudinaux entre les différentes couches composant la conduite. En particulier, on peut admettre que c'est la couche d'armature 4 qui reprend seule l'essentiel des efforts de tension que subit la conduite lors de la pose d'une canalisation sur une barge flottante située sur place en pleine mer, quand elle est retenue de plonger trop vite en mer par un tensionneur, de telle sorte qu'ils se transmettent par des efforts de cisaillement passant au tube interne, ce qui a pour effet de diminuer les efforts mécaniques auxquels doivent résister les pièces de raccordement 20

Il doit être clair aussi que, bien que particulièrement adaptée aux applications sous-marines, notamment à la réalisation de canalisations sous-marines destinées à véhiculer des produits pétroliers, on ne saurait cantonner l'invention à ce seul type d'applications. Elle s'applique également à la réalisation de toutes sortes de conduites calorifugées, et notamment à celle de conduites calorifugées destinées à être immergées dans un milieu externe où règne une pression élevée.

## Revendications

1. Procédé de réalisation d'une conduite calorifugée (1) à enveloppe externe (4) de protection d'une couche annulaire intermédiaire (3) en matériau calorifuge entourant un tube interne (2) de ladite conduite, notamment pour la construction de canalisations sous-marines destinées à véhiculer des produits pétroliers, caractérisé en ce qu'il comprend une étape consistant à enrouler un fil (40) à comportement non élastique autour de ladite couche de matériau calorifuge (3), selon une configuration spiralée à spires suffisamment jointives pour constituer ladite enveloppe (4) en ses propriétés de protection mécanique de ladite couche intermédiaire (3).

2. Procédé suivant la revendication 1 caractérisé en ce que ledit fil matériau calorifuge de ladite couche intermédiaire (4) est un matériau microporeux à haute porosité en pores ouverts se présentant en une structure tridimensionnelle cohérente, présentant une souplesse suffisante pour être mise en oeuvre par enroulement autour dudit tube interne (2).

3. Procédé selon la revendication 1 ou 2, caractérisé en ce que ledit fil (40) est en acier de densité supérieure à six et ce qu'il est de section ronde.

4. Procédé suivant l'une quelconque des revendications 1 à 3, caractérisé en ce que l'enroulement dudit fil (40) est effectué dans des conditions dans lesquelles ledit fil a un comportement non élastique et le moment de force appliqué audit matériau calorifuge est insuffisant à le détériorer.

5. Procédé selon l'une quelconque des revendications précédentes, caractérisé en ce que ledit enroulement du fil (40) autour dudit tube interne (2) muni de ladite couche intermédiaire (3) est obtenue en animant ledit tube interne (2) d'un mouvement de rotation autour d'un premier axe horizontal (Δ1), en ce que le fil (40) est dévidé à partir d'une bobine d'alimentation (BF), tournant librement autour d'un second axe horizontal (Δ1), en ce que l'on prévoit des moyens de guidage (81) du fil (40) disposés entre ladite bobine d'alimentation (BF) et ledit tube (2) en rotation, et en ce que ces moyens de guidage (81) exercent une force créant un moment de force au niveau du tube (2) muni de la couche de matériau calorifuge (3) de manière à dépasser la limite élastique du fil (40) et créer une réaction d'appui sur le matériau calorifuge (4) suffisamment faible pour ne pas l'écraser de façon significative lors de l'enroulement et détériorer ses qualités dans ladite couche intermédiaire (3).

6. Procédé selon la revendication 5, caractérisé en ce que ledit moment est obtenu en éloignant ledit dispositif de guidage vertical (81) dudit tube (2) en rotation, de manière à créer un bras de levier nécessaire à l'obtention dudit moment.

7. Procédé selon l'une quelconque des revendications précédentes, caractérisé en ce qu'il consiste en outre à envelopper ledit tube interne (2) entourée d'au moins une couche de matériau calorifuge (3) et de ladite armature (4) par une couche externe d'étanchéité (5) en matériau élasto-plastique, avantageusement à base de polyoléfines telles que les résines de polyéthylène.

8. Conduite calorifugée telle que résultant de la mise en oeuvre du procédé suivant l'une quelconque des revendications 1 à 7, caractérisée en ce que ledit fil (40) est partiellement incrusté en tous points dans ladite couche intermédiaire (3) de matériau calorifuge.

9. Conduite suivant la revendication 8, caractérisée en ce qu'elle comporte une couche externe d'étanchéité (5) telle que réalisée par le procédé de la revendication 7, enrobant la surface extérieure des spires du fil (40).

10. Conduite suivant la revendication 9, caractérisée en que ledit matériau calorifuge est constitué d'un mélange de poudre silicique et de fibres de renforcement céramiques, le tout compacté en une structure tridimensionnelle cohérente à haute porosité en pores ouverts et retenu dans une enveloppe non étanche aux gaz, et en ce qu'il se présente en bandes autoporteuses enroulables en appui sur ledit tube interne (2).

11. Conduite suivant la revendication 9 ou 10, caractérisée en que ladite couche externe (5) recouvre également des pièces (20) de raccordement entre conduites successives, prévues en des zones terminales aux deux extrémités de ladite conduite, auxquelles ledit fil (40) est avantageusement soudé en son extrémité.
